# EUROPÄISCHE PATENTANMELDUNG

(11) **EP 1 404 095 A1**
(43) Veröffentlichungstag der Anmeldung: **31.03.2004**
(21) Anmeldenummer: 03022002.4
(22) Anmeldetag: 30.09.2003
(51) Int. Cl.: H04M 3/51, H04M 7/00

(54) **Call-Center**

(30) Priorität: 30.09.2002 DE 10245615
(71) Anmelder: Tenovis GmbH & Co. KG, 60326 Frankfurt am Main (DE)
(72) Erfinder: Menk, Klaus-Dieter, 65597 Hünfelden-Ohren (DE); Rotter, Frank, 71336 Waiblingen (DE); Stimac, Daniel, 71336 Waiblingen (DE); Mayer, Axel, 83026 Rosenheim (DE)
(74) Vertreter: Leson, Thomas Johannes Alois, Dipl.-Ing.

(57) **Zusammenfassung**

Bereitgestellt wird ein Call-Center mit
einem Koppelfeld (**32**) zur Verbindung eines Kunden mit einem Bearbeiter, einem mit dem Koppelfeld verbundenen Gateway (**35**) zur Umwandlung von Sprachsignalen des Kunden in Sprachsignaldaten und zur Umwandlung von Sprachsignaldaten des Bearbeiters in Sprachsignale, einer Speichereinrichtung (**49**) mit Informationsdaten bezüglich des Kunden und einer Übertragungseinrichtung (**33**) zur paketweisen Übertragung von Informationsdaten und Sprachsignaldaten zwischen dem Call-Center und dem Bearbeiter über einen gemeinsamen Übertragungsweg.

## Beschreibung

Die Erfindung betrifft ein Call-Center mit einem Koppelfeld zur Verbindung eines Kunden des Call-Centers mit einem Bearbeiter des Call-Centers.

Ein Call-Center mit einem Koppelfeld ist als eine vorzugsweise zentrale Stelle einer Firma bzw. einer Institution bekannt, an die sich Kunden bzw. allgemein Personen mit Hilfe des Telefons als Sprachübertragungsmittel wenden können.

In dem Call-Center werden eingehende Anrufe über ein Koppelfeld in bekannter Weise an Mitarbeiter des Call-Centers weitergeleitet. Das Call-Center kann dabei Bearbeitungsstellen an der Örtlichkeit des Call-Centers, aber auch Bearbeitungsstellen beinhalten, die nicht vor Ort am Call-Center eingerichtet sind.

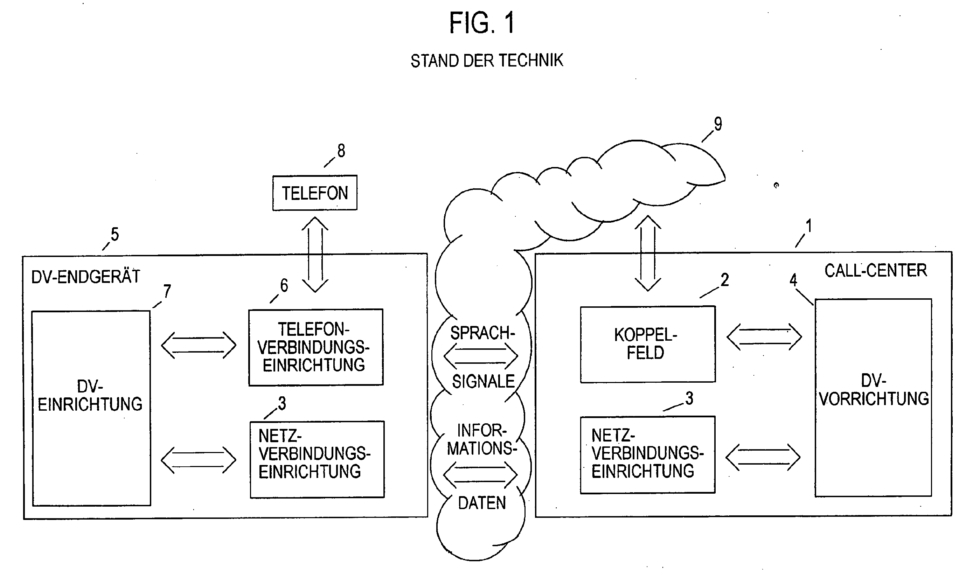

Die Mitarbeiter bzw. Bearbeiter an derartigen externen Bearbeitungsstellen des Call-Centers müssen über ein Signalübertragungs- bzw. Datenübertragungsnetz mit dem Call-Center verbunden werden. Ist ein Bearbeiter beispielsweise mit einem Heimarbeitsplatz ausgestattet, ist er vorzugsweise über eine Leitungsverbindung für eine Sprachsignalübertragung und eine weitere Leitungsverbindung zur Übertragung sonstiger Daten bzw. Nicht-Sprachdaten bzw. Informationsdaten mit dem Call-Center verbunden. Ein Beispiel einer derartigen bekannten Anordnung ist in Fig. 1 dargestellt.

In Fig. 1 zeigt Bezugszeichen 1 ein Call-Center, das ein Koppelfeld 2, eine Netzverbindungseinrichtung 3 und eine Datenverarbeitungsvorrichtung 4 beinhaltet. Das Koppelfeld 2 entspricht beispielsweise einer Private Branche eXchange bzw. PBX, d.h. einer privaten Telekommunikationsanlage bzw. einer privaten Nebenstellenanlage. Das Koppelfeld 2 ist vorzugsweise mit einem externen Telefonnetz 9 verbunden. Ein Teilnehmer bzw. Kunde des Call-Centers kann sich mittels eines Telefonanrufs über das Koppelfeld 2 in das Call-Center 1 einwählen.

Die Datenverarbeitungsvorrichtung 4 entspricht dabei beispielsweise einem zentralen Rechner des Call-Centers 1, der vorzugsweise die Datenverarbeitungsvorgänge in dem Call-Center unterstützt, verwaltet bzw. ausführt. Die Datenverarbeitungsvorrichtung 4 ist mit dem Koppelfeld 2 und der Netzverbindungseinrichtung 3 verbunden.

Ferner zeigt Fig. 1 einen Heimarbeitsplatz mit einem Telefon 8 eines Bearbeiters bzw. Agenten des Call-Centers 1, das bspw. mit einem Datenverarbeitungsendgerät 5 in Verbindung steht. Das Datenverarbeitungsendgerät 5 entspricht beispielsweise einem Heimarbeitsplatzrechner des Bearbeiters.

Das Datenverarbeitungsendgerät 5 beinhaltet eine Telefonverbindungseinrichtung 6, eine Datenverarbeitungseinrichtung 7 und eine Netzverbindungseinrichtung 3. Die Datenverarbeitungseinrichtung 7 ist mit der Telefonverbindungseinrichtung 6 und der Netzverbindungseinrichtung 3 verbunden. Die Datenverarbeitungseinrichtung 7 entspricht vorzugsweise der Zentraleinheit eines Personal Computers, der Datenverarbeitungsvorgänge in dem Heimarbeitsplatzrechner unterstützt, verwaltet bzw. ausführt.

Zwischen dem Bearbeiter am Heimarbeitsplatz des Call-Centers 1 und dem Kunden kann in bekannter Weise eine Telefonverbindung über die Elemente Telefon 8, Telefonverbindungseinrichtung 6, Koppelfeld 2 und externes Netz 9 für eine Sprachkommunikation ausgeführt werden. Für eine derartige Sprachkommunikation werden Sprachsignale vorzugsweise bidirektional zwischen den Telefonen übertragen.

Ferner kann zwischen der Netzverbindungseinrichtung 3 des Datenverarbeitungsendgeräts 5 und der Netzverbindungseinrichtung 3 des Call-Centers 1 eine Datenübertragungsverbindung zur Übertragung von Informationsdaten hergestellt werden.

Bei einem derartigen Aufbau erfolgt eine Sprachübertragung beispielsweise mittels ISDN und werden Informationsdaten über ein Modem oder über eine ISDN-Karte und einen entsprechend konfigurierten RAS-Zugang, d.h. Remote Access Service übertragen.

Ruft ein Kunde des Call-Centers 1 den Bearbeiter an dem Heimarbeitsplatz mittels Anwahl mit einer entsprechenden Nebenstellennummer an, wird er aus dem externen Netz 9 von dem Koppelfeld 2 über eine Sprachübertragungsverbindung zur Übertragung von Sprachsignalen in dem externen Netz 9 mit der Telefonverbindungseinrichtung 6 des Datenverarbeitungsendgeräts 5 verbunden. Der Bearbeiter kann von seinem Datenverarbeitungsendgerät 5 über die Netzverbindungseinrichtung 3 eine Verbindung mit der Netzverbindungseinrichtung 3 des Call-Centers 1 herstellen. Damit besteht die Möglichkeit, dass der Bearbeiter von seinem Heimarbeitsplatz aus etwa auf die Datenverarbeitungsvorrichtung 4 des Call-Centers 1, bspw. für Speicherabfragen, zugreifen kann.

In der Datenverarbeitungsvorrichtung 4 können beispielsweise Informationen über Kunden des Call-Centers 1 gespeichert sein. Der Bearbeiter des Call-Centers kann somit von seinem Heimarbeitsplatzrechner 5 Informationsdaten über eine Datenverbindung zwischen den Netzverbindungseinrichtungen 3 des Datenverarbeitungsendgeräts 5 und des Call-Centers 1 austauschen und kann beispielsweise mittels seines Telefons über eine Sprachverbindung zwischen der Telefonverbindungseinrichtung 6 und dem Koppelfeld 2 mit dem Kunden kommunizieren.

Eine derartige Lösung zur Realisierung von Remote-, bzw. Heim-Arbeitsplätzen an Call-Centern mit einem Koppelfeld, d.h. an Call-Centern, die nicht auf Datenverbindungen zu dem Kunden mit Internetprotokoll basiert, benötigt auf der Heimarbeitsplatzseite eine spezielle Hardware, um die Sprachverbindung zwischen dem Call-Center und dem Heimarbeitsplatz zu realisieren. Im einzelnen ist für die Übertragung von Sprache zwischen dem Koppelfeld 2 und dem Heim-Arbeitsplatz ein Hardwareaufwand notwendig, um die Telefonverbindung aufrechtzuerhalten und den angeschlossenen Heimarbeitsplatzrechner entsprechend zu steuern. An einem Heimarbeitsplatzrechner kann dies beispielsweise durch Bereitstellung einer speziellen PC-Karte realisiert werden (beispielsweise einer VTM-Karte der Firma Tenovis GmbH & Co. KG).

Es ergibt sich dabei allerdings das Problem, dass die Spezialhardware, wie etwa die spezielle PC-Karte, d.h. bspw. die VTM-Karte, an die jeweilige Umgebung anzupassen ist. Insbesondere im Zuge der permanenten Weiterentwicklung von Betriebssystemen und Rechnerplattformen ist es nötig, die Spezialhardware an diese Umgebung anzupassen und deren Funktion zu gewährleisten.

Insgesamt sind bei einem derartigen Call-Center zwei separate Verbindungen für eine Sprachsignalübertragung und eine Informationsdatenübertragung notwendig. Sprache wird dabei getrennt von Informationsdaten über getrennte Verbindungen übertragen.

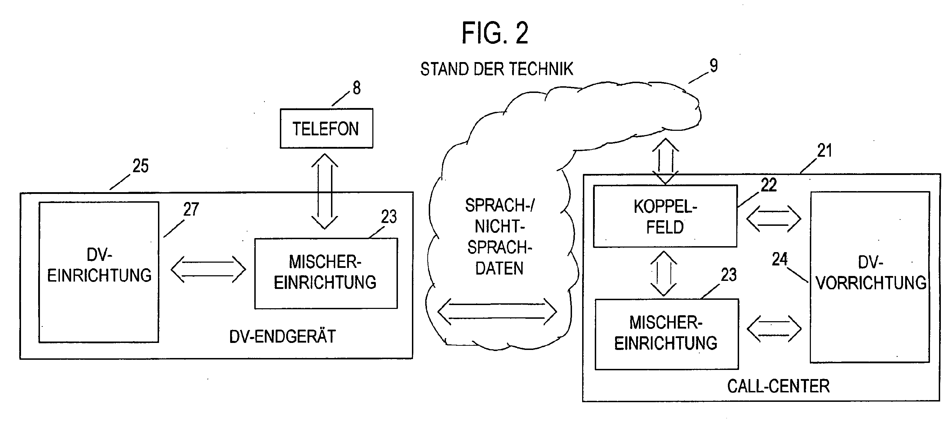

Eine weitere bekannte Möglichkeit zur Anbindung eines Heimarbeitsplatzes an ein Call-Center 21 ist in Fig. 2 dargestellt.

Fig. 2 zeigt ein Call-Center 21 mit einem Koppelfeld 22, einer Mischereinrichtung 23 sowie einer Datenverarbeitungsvorrichtung 24. In dem Call-Center 21 ist das Koppelfeld mit der Mischereinrichtung 23 sowie mit der Datenverarbeitungsvorrichtung 24 verbunden. Darüber hinaus ist die Mischereinrichtung 23 mit der Datenverarbeitungsvorrichtung 24 verbunden.

Außerdem zeigt Fig. 2 einen Heimarbeitsplatz mit einem Datenverarbeitungsendgerät 25, das eine Datenverarbeitungseinrichtung 27 und eine Mischereinrichtung 23 beinhaltet. Die Datenverarbeitungseinrichtung 27 ist mit der Mischereinrichtung 23 verbunden. Darüber hinaus ist ein Telefon 8 mit der Mischereinrichtung 23 verbunden.

Bei dieser bekannten Ausgestaltung kann ein Kunde des Call-Centers 21 von dem externen Netz 9 über das Koppelfeld 22 in das Call-Center 21 eingekoppelt werden. Betrifft der Einwahlwunsch des Kunden bspw. die Nebenstellennummer eines Heimarbeitsplatzes, wird der Anruf über das Koppelfeld 22 an einen Koppelfeldport bzw. Koppelfeldausgang gelegt, der mit der Mischereinrichtung 23 verbunden ist. Von der Mischereinrichtung 23 des Call-Centers 21 werden die Sprachsignale des Kunden in bekannter Weise über eine externe Verbindung zu der Mischereinrichtung 23 des Datenverarbeitungsendgeräts 25 übertragen. Der Bearbeiter kann somit über das Telefon 8 mit dem Kunden eine Sprachkommunikation ausführen. Der Bearbeiter kann gleichzeitig mittels der Mischereinrichtung 23 auf die Datenverarbeitungsvorrichtung 24 des Call-Centers 21 zugreifen und darin vorgehaltene Daten, vorzugsweise Informationsdaten des Kunden, zwischen dem Call-Center 21 und dem Datenverarbeitungsendgerät 25 übertragen.

Die Sprachsignale und die Informationsdaten werden dabei vorzugsweise jeweils von einer sendenden Mischereinrichtung 23 analog gemischt und durch eine geeignete Filtereinrichtung von der jeweils empfangenden Mischereinrichtung 23 in ihre Bestandteile Sprachsignale und Informationsdaten getrennt. Auf diese Weise kann der Bearbeiter von seinem Heimarbeitsplatz über eine Netzverbindung mit dem Call-Center gekoppelt sein und Sprachsignale sowie Informationsdaten austauschen.

Dabei ist jedoch zu berücksichtigen, dass die Mischereinrichtung 23 auf der Bearbeiterseite und der Call-Centerseite einer komplizierten und teuren Hardwarekomponente vorzugsweise mit einem erheblichen Analogtechnikanteil entspricht.

Gemäß den vorstehenden Ausführungen ist diese Anordnung somit speziell an die jeweilige Einsatzumgebung, insbesondere hardwareseitig, angepasst. Eine derartige Anordnung ist deshalb nicht flexibel, d.h. bspw. standortübergreifend, einsetzbar.

Die Funktionalität eines Call-Center Arbeitsplatzes bspw. an einem Heimarbeitsplatz abzubilden ist somit gemäß dem Stand der Technik mit einem hohen technischen und finanziellen Aufwand verbunden.

Aufgabe der Erfindung ist die Bereitstellung eines verbesserten Call-Centers mit einem Koppelfeld zur Verbindung eines Kunden des Call-Centers mit einem Bearbeiter des Call-Centers.

Die Aufgabe wird durch ein Call-Center gemäß dem Patentanspruch 1 gelöst.

Gemäß einer Ausgestaltung der Erfindung wird ein Call-Center mit einem Koppelfeld zur Verbindung eines Kunden mit einem Bearbeiter, einem mit dem Koppelfeld verbundenen Gateway zur Umwandlung von Sprachsignalen des Kunden in Sprachsignaldaten und zur Umwandlung von Sprachsignaldaten des Bearbeiters in Sprachsignale, einer Speichereinrichtung mit Informationsdaten bezüglich des Kunden und einer Übertragungseinrichtung zur paketweisen Übertragung von Informationsdaten und Sprachsignaldaten zwischen dem Call-Center und dem Bearbeiter über einen gemeinsamen Übertragungsweg bereitgestellt.

Das erfindungsgemäße Call-Center bietet den Vorteil, dass zwischen einem Datenverarbeitungsendgerät und einem Call-Center ohne aufwendige Zusatzhardware, wie etwa von Mischereinrichtungen, eine Verbindung für einen gemeinsamen Übertragungsweg zur Übertragung von Sprachsignalen und Informationsdaten bereitgestellt werden kann. Weder in dem Datenverarbeitungsendgerät noch in dem Call-Center ist daher eine aufwendige Mischereinrichtung notwendig.

Das Datenverarbeitungsendgerät, bspw. an einem Heimarbeitsplatz, benötigt keine Spezialhardware und kann durch Standardcomputerkomponenten aufgebaut werden. Durch den Wegfall der Spezialhardware kann ferner das Datenverarbeitungsendgerät an das Call-Center über Standardschnittstellen mit angepasster Software angekoppelt werden. Zur Herstellung einer Verbindung zwischen einem derartigen Remote-Arbeitsplatz und dem Call-Center ist somit vorzugsweise nur eine bestimmte Software zu installieren.

Mit dem erfindungsgemäßen Call-Center kann somit auf einfache Weise eine Verbindung zum Übertragen von Sprachsignaldaten und Informationsdaten zwischen einem Heimarbeitsplatz und dem Call-Center aufgebaut werden.

Gemäß einer weiteren Ausgestaltung der Erfindung wird ein Call-Center bereitgestellt, wobei die Übertragungseinrichtung eine Datenkomprimierung hinsichtlich der Sprachsignaldaten von dem Gateway und der Informationsdaten von der Speichereinrichtung sowie eine Datendekomprimierung hinsichtlich der von dem gemeinsamen Übertragungsweg eingehenden Informationsdaten und Sprachsignaldaten ausführt.

Durch die Datenkomprimierung hinsichtlich der Sprachdaten von dem Gateway und der Informationsdaten von der Speichereinrichtung sowie der Datendekomprimierung hinsichtlich der von dem gemeinsamen Übertragungsweg eingehenden Informationsdaten und Sprachsignaldaten in der Übertragungseinrichtung wird die zu übertragende Datenmenge verringert und kann eine Verbindung zwischen dem Datenverarbeitungsendgerät und dem Call-Center auch über ein bekanntes Standardmodem und eine analoge Telefonverbindung hergestellt werden.

Gemäß einer weiteren Ausgestaltung der Erfindung entspricht das Gateway einem IP-Gateway.

Die Sprachsignaldaten und die Informationsdaten erhalten somit für eine Übertragung zwischen dem Datenverarbeitungsendgerät und dem Call-Center eine Internetprotokoll-Adresse bzw. eine IP-Adresse zugewiesen. Somit können die Sprachsignaldaten und die Informationsdaten bspw. über ein übliches Telefonnetz sowie über ein lokales Netz bzw. ein LAN-Netz übertragen werden.

Gemäß einer weiteren Ausgestaltung der Erfindung führt das Gateway die Umwandlung von Sprachsignalen des Kunden in Sprachsignaldaten und die Umwandlung von Sprachsignaldaten des Bearbeiters in Sprachsignale nach dem H-323-Protokoll aus.

Gemäß einer weiteren Ausgestaltung der Erfindung ist einem Koppelfeldport des Koppelfelds eine IP-Adresse des Gateways fest zugeordnet. Somit kann bei Bekanntsein einer Komponente aus dem Koppelfeldport oder der IP-Adresse sofort die jeweils aktuell gültige korrespondierende Komponente ermittelt werden.

Gemäß einer weiteren vorteilhaften Ausgestaltung der Erfindung beinhaltet das Call-Center eine Adressenverwaltungseinheit zur dynamischen Vergabe einer IP-Adresse des Gateways.

IP-Adressen eines Gateways können somit in einer Timesharing-Weise verwendet werden. Beispielsweise kann eine bestimmte IP-Adresse sequenziell verschiedenen Bearbeitern des Call-Centers zugewiesen werden. Da bspw. davon auszugehen ist, dass so gut wie nie alle Bearbeiter eines Call-Centers gleichzeitig an dem Call-Center angeschlossen sind, muss die Anzahl der zur Verfügung stehenden IP-Adressen nicht der Anzahl der Bearbeiter des Call-Centers entsprechen. Folglich kann der IP-Adressen-Umfang für das Gateway verringert werden. Das Call-Center kann folglich aus kostengünstigeren Komponenten erstellt werden.

Gemäß einer weiteren vorteilhaften Ausgestaltung der Erfindung ist das Call-Center ferner mit einer Adressenspeichereinheit zur Speicherung einer durch die Adressenverwaltungseinheit erstellten Zuordnung zwischen einem Identifizierungscode und einer IP-Adresse des Gateways ausgestattet.

In der Adressenspeichereinheit sind somit die aktuellen Zuordnungen zwischen einem Identifizierungscode eines Bearbeiters und einer IP-Adresse gespeichert. Durch eine Abfrage der Adressenspeichereinheit ist somit sofort verifizierbar, ob eine IP-Adresse des Gateways momentan verfügbar ist oder nicht. Gleichzeitig kann durch Bekanntsein einer Komponente aus dem Identifizierungscode und der IP-Adresse jeweils die korrespondierende Komponente ermittelt werden.

Gemäß einer weiteren vorteilhaften Ausgestaltung der Erfindung entspricht die Adressenverwaltungseinheit einem DHCP-Server.

Gemäß einer weiteren vorteilhaften Ausgestaltung der Erfindung bearbeitet das Koppelfeld eine empfangene Anrufanforderung von einem Kunden so, dass sie die gespeicherten Zuordnungen in der Adressenspeichereinheit nach einem Speichereintrag des angeforderten Identifizierungscodes durchsucht und den Anruf an den Koppelfeldport gemäß der gespeicherten Zuordnung für den angeforderten Identifizierungscode der Adressenspeichereinheit weiterleitet.

Obwohl ein Bearbeiter vorzugsweise keinen fest zugeordneten Koppelfeldport aufweist und sich eine IP-Adresse mit weiteren Bearbeitern sequenziell teilt, kann das Koppelfeld eine Anrufanforderung an den Bearbeiter unmittelbar durch Berücksichtigung der Adressenspeichereinheit an einen passenden Koppelfeldport anlegen.

Gemäß einer weiteren vorteilhaften Ausgestaltung der Erfindung beinhaltet der Identifizierungscode eine Nebenstellennummer.

Enthält eine empfangene Anrufanforderung eine Nebenstellennummer eines Bearbeiters, kann durch Berücksichtigung der Speicherinhalte der Adressenspeichereinheit ein aktueller Koppelfeldport und eine aktuelle IP-Adresse des gewünschten Bearbeiters ermittelt werden. Der Anruf mit einer festen Nebenstellennummer kann somit durch das Koppelfeld an den gewünschten Bearbeiter mit einer dynamisch zugewiesenen IP-Adresse weitergeleitet werden.

Gemäß einer weiteren Ausgestaltung der Erfindung ist eine Zuordnung eines Identifizierungscodes zu einem Koppelfeldport möglich. Durch diese Maßnahme wird erreicht, dass die Rufnummer des Ports der Telekommunikationsanlage umkonfiguriert werden kann, so dass der Port eine dem Bearbeiter entsprechende Rufnummer erhält. Der Bearbeiter ist dann immer unter seiner persönlichen Telefonnummer erreichbar, ob er nun im Call-Center oder an seinem Heimarbeitsplatz arbeitet.

Die Erfindung wird nachstehend anhand von Ausführungsbeispielen unter Bezugnahme auf die Zeichnung erläutert. Es zeigen:
Fig. 1 eine bekannte Verknüpfung zwischen einem Call-Center und einem Heimarbeitsplatz über ein externes Telefonnetz,
Fig. 2 eine bekannte Verknüpfung zwischen einem Call-Center und einem Heimarbeitsplatz über Mischereinrichtungen, die über ein externes Telefonnetz miteinander verbunden sind,
Fig. 3 eine Verknüpfung eines Call-Centers mit einem Heimarbeitsplatz über ein externes Datennetz gemäß einem ersten Ausführungsbeispiel der Erfindung,
Fig. 4 ein Blockschaltbild eines Call-Centers gemäß einem zweiten Ausführungsbeispiel der Erfindung,
Fig. 5 Speicherinhalte eines Adressenspeichers gemäß dem zweiten Ausführungsbeispiel der Erfindung,
Fig. 6 ein Flussdiagramm zur Veranschaulichung einer IP-Adressenvergabe gemäß dem zweiten Ausführungsbeispiel von Fig. 4 und
Fig. 7 ein Flussdiagramm zur Veranschaulichung eines Einwahlvorgangs gemäß dem zweiten Ausführungsbeispiel der Erfindung.

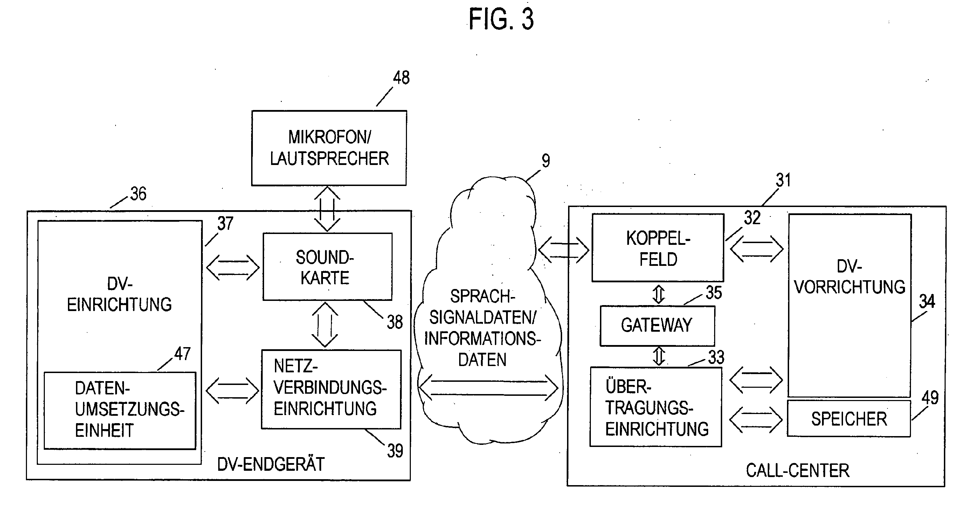

Ein Ausführungsbeispiel der Erfindung wird nachstehend unter Bezugnahme auf Fig. 3 erläutert.

Fig. 3 zeigt eine Verknüpfung eines Call-Centers 31 mit einem Datenverarbeitungsendgerät 36 über ein zwischengeschaltetes Datenübertragungsnetz 9 wie bspw. ein privates Telefonnetz, ein öffentliches Telefonnetz oder ein LAN.

Ein Call-Center 31 beinhaltet ein Koppelfeld 32, ein Gateway 35, eine Übertragungseinrichtung 33, eine Datenverarbeitungsvorrichtung 34 sowie eine Speichereinrichtung 49. Das Koppelfeld 32 weist zumindest einen Anschluss zu dem Netz 9 auf. Das Koppelfeld 32 ist weiterhin mit dem Gateway 35 sowie mit der Datenverarbeitungsvorrichtung 34 verbunden. Die Übertragungseinrichtung 33 ist mit dem Gateway 35 sowie mit der Datenverarbeitungsvorrichtung 34 und der Speichereinrichtung 39 verbunden.

Die Übertragungseinrichtung 33 beinhaltet zumindest einen Anschluss an das Netz 9. Das Koppelfeld 32 entspricht vorzugsweise einer privaten Nebenstelleneinrichtung, die Verbindungen zwischen ihren Koppelfeldports herstellt. Verbindungen werden gemäß Informationen, wie etwa Nebenstellennummern in den eingehenden Anrufanforderungen, ausgeführt. Das Koppelfeld entspricht dabei einer Verbindungseinrichtung, deren Betrieb nicht auf Internetprotokoll-Adressstruktur bzw. einer datenpaketorientierten Verarbeitung basiert.

Das Gateway 35 stellt vorzugsweise einen Übergangspunkt zwischen Netzen dar, deren Betrieb, Aufbau und jeweils verwendete Protokollstruktur voneinander abweichen. Im Einzelnen setzt das Gateway 35 die von dem Koppelfeld 32 empfangenen Sprachsignale in Sprachsignaldaten gemäß einem vorbestimmten Protokoll um und wandelt von der Übertragungseinrichtung 33 empfangene Sprachsignaldaten in Sprachsignale für das Koppelfeld 32 gemäß dem vorbestimmten Protokoll um. Das Gateway 35 entspricht dabei vorzugsweise einem IP-Umsetzer bzw. einem Internet-Protokoll-Umsetzer. Eine Datenumsetzung findet dabei vorzugsweise nach dem H.323-Protokoll statt. Die Sprachdaten werden über das Gateway 35 in Datenpakete wie bspw. IP-Datenpakete umgesetzt. Die Datenpakete werden danach an die Datenübertragungseinrichtung 33 geleitet.

Die Speichereinrichtung 49 speichert beispielsweise Informationsdaten bezüglich des Kunden des Call-Centers.

Über die Übertragungseinrichtung 33 werden Informationsdaten von der Speichereinrichtung 49 und Sprachsignaldaten von dem Gateway 35 zwischen dem Call-Center und dem Datenverarbeitungsendgerät eines Bearbeiters vorzugsweise über einen gemeinsamen Übertragungsweg übertragen. Der gemeinsame Übertragungsweg ist dabei beispielsweise in einem internen Local Area Network (LAN), einem externen Datennetz, einem externen Telefonnetz oder Funknetz beinhaltet. Die Datenverarbeitungsvorrichtung 34 entspricht beispielsweise einem zentralen Rechner des Call-Centers 31 , der bspw. den Gesamtbetrieb des Call-Centers unterstützt.

Einem jeden Port aus einer vorbestimmten Zahl von Koppelfeldports des Koppelfelds 32 ist jeweils eine bestimmte IP-Adresse über das Gateway 35 zugeordnet.

Das Datenverarbeitungsendgerät 36 eines Mitarbeiters des Call-Centers 31 beinhaltet vorzugsweise eine Datenverarbeitungseinrichtung 37 mit einer Datenumsetzungseinheit 47, eine Netzverbindungseinrichtung 39, eine Sound-Karte 38 sowie ein Mikrofon/Lautsprecher 48.

Die Netzverbindungseinrichtung 39 weist zumindest einen Anschluss zu dem Netz 9 auf und weist weiterhin Verbindungen zu der Datenverarbeitungseinrichtung 37 sowie der Soundkarte 38 auf. Die Soundkarte 38 weist ferner eine Verbindung zu der Datenverarbeitungseinrichtung 37 sowie zu dem Mikrofon/Lautsprecher 48 auf.

Die Netzverbindungseinrichtung 39 dient als Schnittstelle des Datenverarbeitungsendgeräts 36 zu dem Netz 9. Empfängt die Netzverbindungseinrichtung 39 Daten, trennt sie diese in Sprachdaten und Informationsdaten. Eine derartige Datentrennung kann beispielsweise mit Hilfe einer Kennung der Datenart ausgeführt werden.

Informationsdaten können von der Datenverarbeitungseinrichtung 37 beispielsweise direkt weiterverarbeitet oder gespeichert werden. Sprachsignaldaten werden vorzugsweise von der Datenverarbeitungseinrichtung 36 der Datenumsetzungseinheit 47 eingespeist. Die Datenumsetzungseinheit 47 setzt die eingespeisten Daten gemäß einem vorbestimmten Protokoll um. Das vorbestimmte Protokoll kann beispielsweise dem H.323-Protokoll entsprechen. Dabei werden Voice-over-IP-Datenpakete in Sprachsignale umgesetzt und an die Soundkarte 38 weitergeleitet, sodass deren Inhalte über die Lautsprecher 48 ausgegeben werden können. Von einem Bearbeiter über das Mikrofon 48 eingespeiste Sprachsignale werden in bekannter Weise über die Soundkarte 38 der Datenverarbeitungseinrichtung 37 zugeführt. In der DV-Einrichtung 37 werden die Sprachsignale des Bearbeiters der Datenumsetzungseinheit 47 eingespeist. Die Datenumsetzungseinheit 47 verarbeitet die Sprachsignale gemäß dem vorbestimmten Protokoll in paketierte Sprachsignaldaten. Die paketierten Sprachsignaldaten werden über die Netzverbindungseinrichtung 39 nach extern an eine zugeordnete Zieladresse, vorzugsweise eine IP-Adresse ausgegeben. Dabei können Informationsdaten aus der Datenverarbeitungseinrichtung 37 über einen gemeinsamen Übertragungsweg nach extern übertragen werden.

Die Komponenten des Datenverarbeitungsendgeräts können standardmäßigen Komponenten entsprechen. Eine Anpassung der Komponenten an den jeweiligen Arbeitsplatz kann über eine Softwareprozedur ausgeführt werden.

Nachstehend wird beispielhaft eine Kommunikation zwischen einem Kunden des Call-Centers mit einem Bearbeiter des Call-Centers gemäß Fig. 3 erläutert. Es wird dabei angenommen, dass die angewählte Nebenstellennummer der Nummer eines Bearbeiters beispielsweise an einem externen Heimarbeitsplatz entspricht.

Wählt ein Kunde des Call-Centers 31 sich beispielsweise von einer externen Telefonleitung 9 über das Koppelfeld 32 in das Call-Center 31 ein, leitet das Koppelfeld 32 den über einen Koppelfeldport eingehenden Anruf an einen Koppelfeldport weiter, der der angewählten Nebenstellennummer des Heimarbeitsplatzes entspricht. Somit wird eine Verbindung zu einem Koppelfeldport des Koppelfelds 32 hergestellt, das mit dem Gateway 35 verbunden ist. Das Gateway 35 realisiert den Übergang von Anschlüssen des Koppelfelds 32 zu fest konfigurierten IP-Adressen. Die von dem Kunden über das Koppelfeld 32 in das Gateway 35 eingespeisten Sprachsignale werden von dem Gateway 35 gemäß dem vorbestimmten Protokoll, wie etwa dem H.323-Protokoll, in Sprachsignaldatenpakete gewandelt. Die Sprachsignaldatenpakete werden von dem Gateway 35 zu der Übertragungseinrichtung 33 geleitet, die diese gemäß der IP-Adresse an das externe Netz 9 ausgibt. Die Sprachdatensignalpakete werden in dem externen Netz 9 gemäß der IP-Adresse zu dem entsprechenden Datenverarbeitungsendgerät geleitet. Im Einzelnen werden die Sprachsignaldatenpakete der Netzverbindungseinrichtung 39 mit der entsprechenden IP-Adresse eingespeist und an die Datenverarbeitungseinrichtung 37 weitergeleitet. Die Sprachsignaldatenpakete werden dabei in der Datenumsetzungseinheit 47 gemäß einem vorbestimmten Protokoll wie etwa dem H.323-Protokoll in Sprachsignale zurückgewandelt und über die Soundkarte 38 und den Lautsprecher 48 an den Bearbeiter hörbar ausgegeben.

Der Bearbeiter kann über eine Spracheingabe, bspw. in das Mikrofon 48, eine Kommunikation mit dem Kunden des Call-Centers 31 aufnehmen. Dabei werden die Sprachsignale von dem Mikrofon 48 über die Soundkarte 38 der Datenumsetzungseinheit 47 zugeleitet. Die Datenumsetzungseinheit 47 setzt diese eingegebenen Sprachsignale gemäß dem vorbestimmten Protokoll in Sprachsignaldatenpakete um und gibt diese über die Netzverbindungseinrichtung 39 an das externe Netz 9 zur Weiterleitung an die IP-Adresse des Call-Centers 31 aus. Die ausgegebenen Sprachsignaldatenpakete werden durch das externe Netz gemäß der beigefügten IP-Adresse an das Call-Center 31 geleitet. In dem Call-Center 31 werden die eingehenden Sprachsignaldatenpakete des Bearbeiters 33 an das Gateway 35 geleitet. Das Gateway 35 wandelt die Sprachsignaldatenpakete des Bearbeiters in Sprachsignale um und gibt sie an den Koppelfeldport des Koppelfelds 32 zur Weiterleitung an den Kunden über das externe Netz 9 aus. Das Gateway 35 führt dabei eine Protokollumsetzung der Sprachsignaldatenpakete in Sprachsignale gemäß dem vorbestimmten Protokoll, wie bspw. dem H.323-Protokoll, aus.

Gleichzeitig oder auch separat zu dem Sprachübertragungsvorgang kann der Bearbeiter über die Datenverarbeitungseinrichtung 37, die Netzverbindungseinrichtung 39 des Datenverarbeitungsendgeräts, das externe Netz 9 sowie die Übertragungseinrichtung 33 des Call-Centers Informationsdaten, beispielsweise über den Kunden, von der Speichereinrichtung 49 des Call-Centers 31 abfragen oder an das Call-Center 31 senden. Die vorstehenden Datenübertragungen zwischen dem Datenverarbeitungsendgerät 36 und dem Call-Center 31 werden hinsichtlich der Sprachsignaldaten und der Informationsdaten paketweise ausgeführt.

Die Datenpakte mit Sprachsignaldaten und/oder Informationsdaten werden zwischen dem Datenverarbeitungsendgerät 36 und dem Call-Center 31 über einen gemeinsamen Übertragungsweg übertragen. Mit dem Ausdruck gemeinsamer Übertragungsweg ist dabei ein Übertragungspfad gemeint, der für die Übertragung der Sprachsignaldatenpakete und der Informationsdatenpakete zwischen dem Call-Center 31 und dem Datenverarbeitungsgerät 36 eingerichtet wird. Ein eingerichteter Datenübertragungspfad kann dabei auch beinhalten, dass einzelne Datenpakete über unterschiedliche Strecken bzw. Teilstrecken zwischen einem Anschluss der Übertragungseinrichtung 33 des Call-Centers 31 und einem Anschluss der Netzverbindungseinrichtung 39 des Datenverarbeitungsendgeräts 36 übertragen werden.

Gemäß der vorstehend angeführten Ausführung einer Verknüpfung zwischen einem Call-Center 31 und einem Datenverarbeitungsendgerät 36 können Sprachsignaldaten und Informationsdaten auf einfache Weise über einen gemeinsamen Übertragungsweg übertragen werden. Eine Realisierung des Datenverarbeitungsendgeräts 36 kann aus Standardrechnerkomponenten, wie beispielsweise einem Multimedia-PC, aufgebaut sein. Eine zusätzliche Telefon-Hardware kann entfallen.

Darüber hinaus bietet der vorstehend erläuterte Aufbau den Vorteil, dass zwischen dem Call-Center und einem Datenverarbeitungsendgerät eine einzige Verbindung zwischen einem Anschluss der Netzverbindungseinrichtung 39 und einem Anschluss der Übertragungseinrichtung 33 zur Übertragung von Sprachsignaldaten und Informationsdaten verwendet werden kann. Für die Übertragung der Sprachsignaldaten sowie der Informationsdaten über eine gemeinsame Übertragungsleitung ist somit keine speziell an die Umgebung anzupassende Hardware notwendig.

Da für die Anwendung des Datenverarbeitungsendgerätes 36 in dem Call-Center 31 keine spezielle Hardware auf der Datenverarbeitungsendgerätseite notwendig ist, und somit vorzugsweise nur eine geeignete Software an dem jeweiligen Rechner installiert werden muss, kann ein erfindungsgemäßes Call-Center mit Datenverarbeitungsendgeräten mit geringstem Aufwand, d. h. vorzugsweise nur mit einer Softwareanpassung, gekoppelt werden.

Für die Verbindung zwischen einem Datenverarbeitungsendgerät 36 und einem Call-Center 31 genügt die Herstellung beispielsweise einer Telefonverbindung mittels Remote Access Service (RAS).

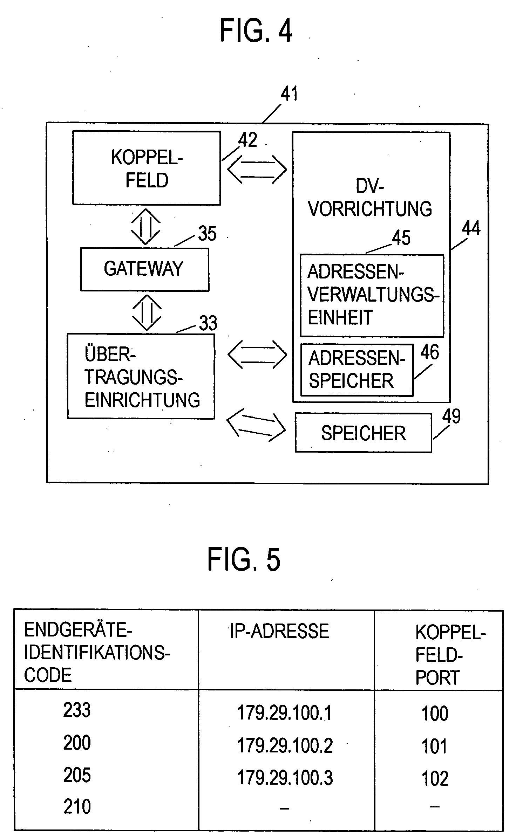

Fig. 4 zeigt ein weiteres Ausführungsbeispiel der Erfindung. Gemäß Fig. 4 beinhaltet ein Call-Center 41 ein Koppelfeld 42, ein Gateway 35, eine Übertragungseinrichtung 33, eine Speichereinrichtung 49 sowie eine Datenverarbeitungsvorrichtung 44 mit einer Adressenverwaltungseinheit 45 und einem Adressenspeicher 46. Das Koppelfeld 42 ist mit der Datenverarbeitungsvorrichtung 44 sowie dem Gateway 35 verbunden. Die Übertragungseinrichtung 33 weist vorzugsweise zumindest einen Anschluss an das Netz 9 auf und ist intern mit dem Gateway 35 sowie der Datenverarbeitungsvorrichtung 44 verbunden.

Das Koppelfeld 42 dient in gleichartiger Weise wie das Koppelfeld des ersten Ausführungsbeispieles zur Herstellung einer Verbindung zwischen Koppelfeldports. Vorzugsweise zwischen einer bestimmten Anzahl von Koppelfeldports des Koppelfelds 42 und einer entsprechenden Anzahl von IP-Adressen des Gateways 35 besteht eine feste Zuordnung. Zwischen dem Gateway 35 und der Übertragungseinrichtung 33 werden Sprachsignaldaten übertragen. Die Speichereinrichtung 49 des Call-Centers 41 ist identisch mit der des ersten Ausführungsbeispieles, weshalb auf deren Erläuterung verzichtet wird.

Die Adressenverwaltungseinheit 45 entspricht beispielsweise einem Dynamik Host Control Protokoll-Server bzw. DHCP-Server, der die IP-Adressen des Gateways 35 verwaltet. Im einzelnen wird einem Datenverarbeitungsendgerät 36 eines Bearbeiters, auf dessen Zuordnungsanforderung an die Datenverarbeitungsvorrichtung 44, durch die Adressenverwaltungseinheit 45 eine IP-Adresse des Gateways 35 zugewiesen. Diese Zuweisung ist jedoch nicht fest definiert, sondern bleibt nur temporär bestehen. Die Adressenverwaltungseinheit 45 führt somit eine dynamische IP-Adressenzuweisung aus, wobei in einer Timesharing-Weise jeweilige IP-Adressen sequentiell verschiedenen Datenverarbeitungsendgeräten 36 zugeordnet werden.

Mit der Zuordnungsanforderung überträgt das Datenendgerät vorzugsweise einen Endgeräteidentifikationscode zu dem Call-Center 41. Die Adressenverwaltungseinheit 45 speichert nach einer erfolgten Zuweisung einer IP-Adresse zu einem Datenverarbeitungsendgerät 36 den jeweiligen Endgeräteidentifikationscode mit einer Zuordnung zu der IP-Adresse ab. Der Adressenspeicher 46 beinhaltet somit eine aktuelle Zuordnung zwischen einem Endgeräteidentifikationscode und einer IP-Adresse, wie es in Figur 5 dargestellt ist.

Der Adressenspeicher 46 kann neben diesen beiden Elementen bspw. ebenso die feste Zuordnung zwischen einer IP-Adresse und dem entsprechenden Koppelfeldport enthalten. Da sich bei dem zweiten Ausführungsbeispiel lediglich die Adressenverwaltung von dem ersten Ausführungsbeispiel unterscheidet, werden weitere Einzelheiten, beispielsweise hinsichtlich der Übertragung von Sprachsignaldaten und Informationsdaten über einen gemeinsamen Übertragungsweg, hier nicht nochmals wiederholt.

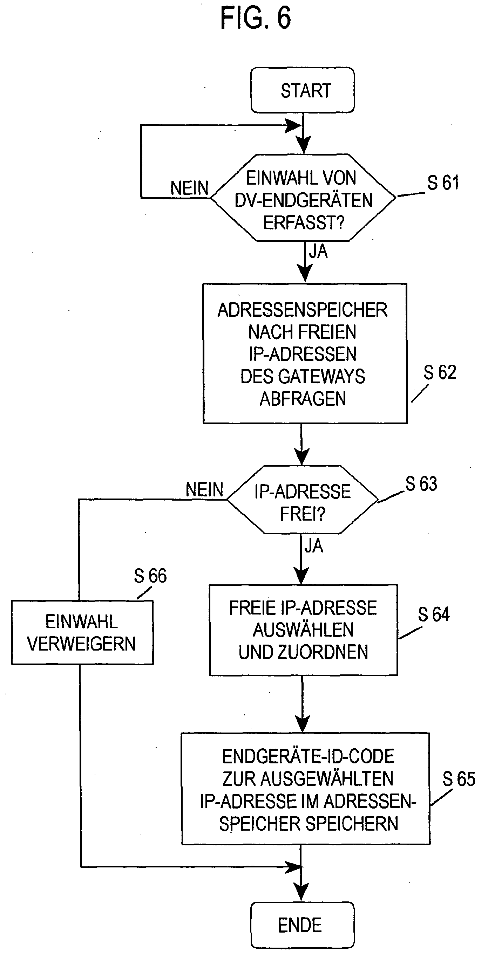

Im weiteren wird eine IP-Adressenzuweisung zu einem Datenverarbeitungsendgerät 36 unter Bezugnahme auf ein Flussdiagramm von Figur 6 erläutert. Die erläuterte Routine wird von der Datenverarbeitungsvorrichtung 44 wiederholt, insbesondere von der Adressenverwaltungseinheit 45, vorzugsweise mit einer vorbestimmten Periode.

In der Routine wird in Schritt S61 überprüft, ob von einem Datenverarbeitungsendgerät 36 eine Einwahl mit einer Anforderung nach einer Zuordnung zu einer IP-Adresse des Gateways 35 erfasst worden ist. Solange keine entsprechende Einwahl von dem Datenverarbeitungsendgerät 36 erfasst worden ist, wird der Schritt S61 periodisch nach einem vorbestimmten Zeitintervall wiederholt. Ist eine entsprechende Einwahl in Schritt S61 erfasst worden, wird der Adressenspeicher 46 durch die Adressenverwaltungseinheit 45 nach freien bzw. nicht zugeordneten IP-Adressen des Gateways 35 abgefragt bzw. durchsucht. Ist keine IP-Adresse für eine Zuordnung zu einem Datenverarbeitungsendgerät 36 verfügbar (vergleiche Schritt S63), kann dem anfragenden Datenverarbeitungsendgerät keine IP-Adresse des Gateways zugeordnet werden. In Schritt S66 wird dem Datenverarbeitungsendgerät 36 in einem derartigen Fall die Einwahl in das Call-Center 41 verweigert. Danach endet die Routine.

Ist jedoch gemäß der Abfrage in Schritt S63 eine IP-Adresse für eine Zuordnung verfügbar, wird in Schritt S64 eine verfügbare IP-Adresse ausgewählt und dem Datenverarbeitungsendgerät 36 zugeordnet. Daraufhin wird in Schritt S65 in dem Adressenspeicher 46 der Endgeräteidentifikationscode des bearbeiteten Datenverarbeitungsendgerätes 36 mit einer Zuordnung zu der ausgewählten IP-Adresse gespeichert.

Die in Schritt S64 durchgeführte Zuordnung entspricht einer dynamischen Zuordnung. D.h. die Zuordnung wird nur temporär aufrechterhalten.

Meldet sich beispielsweise die Datenverarbeitungseinrichtung 36 von dem Call-Center 31 ab, wird die Zuordnung zwischen dem Endgerät und der IP-Adresse aufgehoben und als für eine neue Zuordnung verfügbar in dem Adressenspeicher 46 vorgehalten.

Eine Zuordnung kann ebenso unter bestimmten definierbaren Bedingungen wieder aufgehoben werden. Beispielsweise kann eine maximale Zeitdauer für eine Zuordnung bestimmt sein, oder eine Zuordnung kann gelöscht werden, wenn ein Datenverarbeitungsendgerät über eine vorbestimmte Zeitdauer hinweg nicht mehr auf das Call-Center zugegriffen hat.

Nach der Zuordnung des Datenverarbeitungsendgeräts 36 zu einer IP-Adresse des Gateways 35 besteht für das Datenverarbeitungsendgerät auch die Möglichkeit, den Adressenspeicher 46 nach dem zugeordneten Koppelfeldport abzufragen. Somit kann das Datenverarbeitungsendgerät sich jeweils über den aktuell zugeordneten Koppelfeldport des Koppelfelds 32 informieren.

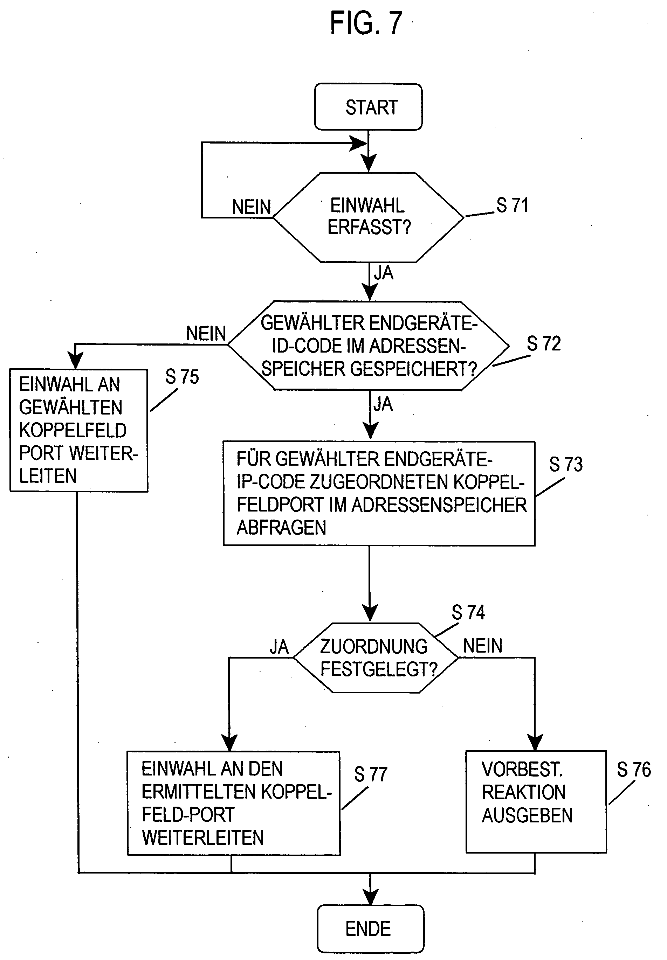

Figur 7 zeigt ein Ablaufdiagramm zur Veranschaulichung der Verbindungsherstellung zwischen einem Kunden des Call-Centers aus einem externen Netz 9 mit einem Datenverarbeitungsendgerät 36 gemäß dem zweiten Ausführungsbeispiel der Erfindung. Die Routine wird vorzugsweise von der Datenverarbeitungsvorrichtung 44 in periodischen Zeitabständen ausgeführt.

Nach dem Start der Routine wird in Schritt S71 geprüft, ob eine Einwahl über einen Koppelfeldport des Koppelfelds 42 von einem externen Anschluss erfasst worden ist. Solange eine externe Einwahl nicht erfasst worden ist, wird der Schritt S71 nach einer vorbestimmten Periode wiederholt.

Ist eine externe Einwahl, beispielsweise von einem Kunden des Call-Centers 41, erfasst worden, überprüft die Datenverarbeitungsvorrichtung, ob in dem Adressenspeicher 46 der bei der aktuellen Einwahl mitgeteilte Endgeräteidentifikationscode gespeichert ist. Der gewählte Endgeräteidentifikationscode kann beispielsweise eine Nebenstellennummer eines jeweiligen Bearbeiters beinhalten.

Wird der Schritt S72 mit Nein beantwortet, folgt Schritt S75, in dem die Einwahl an den gewählten Koppelfeldport weitergeleitet wird. D.h. im konkreten Fall, in dem Adressenspeicher 49 sind vorzugsweise die Datenverarbeitungsendgeräte 36 mit ihren Endgeräteidentifkationscodes aufgelistet, die über das Gateway 35 mit dem Koppelfeld 42 zu verbinden sind. Ist der gesuchte Endgeräteidentifkationscode nicht in dem Adressenspeicher 49 beinhaltet, ist der gewünschte Nebenstellenanschluß im Call-Center direkt mit dem Koppelfeld 32 gekoppelt. Entsprechend endet nach Schritt S75 die Routine.

Wird der Schritt S72 mit Ja beantwortet, folgt der Schritt S73, in dem für den gewählten Endgeräteidentifikationscode der zugeordnete Koppelfeldport im Adressenspeicher 46 abgefragt wird. Ist keine Zuordnung vorhanden, d.h. besteht derzeit keine Verbindung zu dem gewünschten Nebenstellenanschluß bzw. dem gewünschten Bearbeiter, ergibt der nachfolgende Schritt S74 Nein. In diesem Fall folgt der Schritt S76, in dem eine vorbestimmte Reaktion über das Koppelfeld 32 an den Anrufer ausgeben wird. Die vorbestimmte Reaktion kann beispielsweise einem Freizeichen entsprechen oder der Ausgabe einer vorbestimmten Mitteilung an den Anrufer entsprechen. Die vorbestimmte Mitteilung kann beispielsweise darin bestehen, dass eine gespeicherte Mitteilung des jeweiligen Bearbeiters ausgegeben wird. Danach endet die Routine.

Ist eine Zuordnung vorhanden, d.h. ist aktuell dem gewünschten Endgerät eine IP-Adresse zugeordnet, ergibt der nachfolgende Schritt S74 Ja. Danach wird in Schritt S77 die Einwahl an den dem Identificationscode aktuell zugeordneten Koppelfeldport des Koppelfelds 32 weitergeleitet. Somit wird der Anrufer aus dem externen Netz 9 mit dem Datenverarbeitungsendgerät 36 über den entsprechenden Koppelfeldport und die dynamisch zugewiesene IP-Adresse verbunden.

Gemäß der Adressenverwaltung des zweiten Ausführungsbeispiels der Erfindung kann eine IP-Adresse eines Gateways 35 sequentiell an verschiedene Datenverarbeitungsendgeräte 36 vergeben werden. Koppelfeldanschlüsse können somit in einer Timesharing-Weise von mehreren Datenverarbeitungsendgeräten genutzt werden. Dadurch kann die Anzahl der Koppelfeldports und der entsprechenden IP-Adressen bei einer bestimmten Zahl von Endgeräten minimiert werden.

Durch die vorstehend angeführte Adressenzuordnung kann ein Datenverarbeitungsendgerät 36 eines Bearbeiters nach Ermittlung des ihm aktuell zugeordneten Koppelfeldports auch direkt über CSTA-Service (Computer Supported Telecommunications Application) mit dem Koppelfeldport des Koppelfelds 32 verknüpft werden.

Gemäß dem vorliegenden Ausführungsbeispiel ist die Bearbeiterrufnummer bzw. Bearbeiternebenstellennummer mit dem Koppelfeldport des Koppelfelds 32 assoziiert. Der Bearbeiter an dem Datenverarbeitungsendgerät 36 kann somit über seine übliche Nebenstellennummer angerufen werden. Sprachinformationen werden dabei beispielsweise über Voice-Over-IP übertragen. Die Erfindung ist nicht auf IP-Protokolle beschränkt. Weitere Protokollarten sind möglich. Die Protokolle müssen nur ermöglichen, dass Sprachdaten paketweise an ein Datenverarbeitungsendgerät 36 mit einer bestimmten Adresse übertragen werden.

Die vorstehenden Ausführungsbeispiele sind als beispielhafte Möglichkeiten zur Realisierung der Erfindung angeführt. Für den Fachmann sind eine Vielzahl von Modifikationen ersichtlich.

Beispielsweise kann die Speichereinrichtung 49 zur Speicherung von Kundendaten in der Datenverarbeitungsvorrichtung des Call-Centers integriert sein. Ebenso können in dem zweiten Ausführungsbeispiel die Kundendaten in dem Adressenspeicher abgelegt sein.

Ferner kann bspw. die Übertragungseinrichtung 33 sowie die Netzverbindungseinrichtung 39 gemäß dem zweiten Ausführungsbeispiel mit einer Datenkompressionseinrichtung und einer Datendekompressionseinrichtung ausgestattet sein.
Die ein- und ausgehenden Datenströme werden dabei durch diese Einrichtungen komprimiert bzw. dekomprimiert. Durch eine geeignete Datenreduktion kann für die Datenübertragung zwischen dem Endgerät 36 sowie dem Call-Center 31 ein übliches Modem sowie eine analoge Telefonverbindung verwendet werden.

Das Endgerät gemäß den vorstehenden Ausführungsbeispielen kann beispielsweise über eine Verbindung eines lokalen Netzes mit dem Call-Center verbunden sein. Eine Anpassung der Hardware des Endgeräts an die jeweilige Umgebung kann jedoch gemäß den vorstehenden Erläuterungen entfallen. Der Anpassungsaufwand kann sich bspw. auf Änderungen bzw. Anpassungen der Software beschränken.

## Patentansprüche

1. Call-Center mit
einem Koppelfeld **(32; 42)** zur Verbindung eines Kunden mit einem Bearbeiter,
einem mit dem Koppelfeld verbundenen Gateway **(35)** zur Umwandlung von Sprachsignalen des Kunden in Sprachsignaldaten und zur Umwandlung von Sprachsignaldaten des Bearbeiters in Sprachsignale,
einer Speichereinrichtung **(49)** mit Informationsdaten bezüglich des Kunden und
einer Übertragungseinrichtung **(33)** zur paketweisen Übertragung von Informationsdaten und Sprachsignaldaten zwischen dem Call-Center und dem Bearbeiter über einen gemeinsamen Übertragungsweg.

2. Call-Center nach Anspruch 1, wobei die Übertragungseinrichtung **(33)** eine Datenkomprimierung hinsichtlich der Sprachsignaldaten von dem Gateway **(35)** und der Informationsdaten von der Speichereinrichtung **(49)** sowie eine Datendekomprimierung hinsichtlich der von dem gemeinsamen Übertragungsweg eingehenden Informationsdaten und Sprachsignaldaten ausführt.

3. Call-Center nach Anspruch 1 oder 2, wobei das Gateway **(35)** ein IP-Gateway ist.

4. Call-Center nach einem der vorstehenden Ansprüche, wobei das Gateway **(35)** die Umwandlung von Sprachsignalen des Kunden in Sprachsignaldaten und die Umwandlung von Sprachsignaldaten des Bearbeiters in Sprachsignale nach dem H.323-Protokoll ausführt.

5. Call-Center nach einem der vorstehenden Ansprüche, wobei einem Koppelfeldport des Koppelfelds **(32; 42)** jeweils eine IP-Adresse des Gateways **(35)** fest zugeordnet ist.

6. Call-Center nach einem der vorstehenden Ansprüche, ferner mit einer Adressenverwaltungseinheit **(45)** zur dynamischen Vergabe einer IP-Adresse des Gateways **(35)**.

7. Call-Center nach Anspruch 6, wobei die Adressenverwaltungseinheit **(45)** eine freie IP-Adresse des Gateways **(35)** temporär zuweist.

8. Call-Center nach einem der Ansprüche 6 oder 7, ferner mit einer Adressenspeichereinheit **(46)** zur Speicherung einer durch die Adressenverwaltungseinheit **(45)** erstellten Zuordnung zwischen einem Identifizierungscode eines Bearbeiters und einer IP-Adresse des Gateways **(35).**

9. Call-Center nach einem der vorstehenden Ansprüche 6 bis 8, wobei die Adressenverwaltungseinheit **(45)** einem DHCP-Server entspricht.

10. Call-Center nach einem der Ansprüche 8 oder 9, wobei das Koppelfeld **(42)** eine empfangene Anrufanforderung von einem Kunden so bearbeitet, dass sie die gespeicherten Zuordnungen in der Adressenspeichereinheit (46) nach einem Speichereintrag eines angeforderten Identifizierungscodes prüft und den Anruf an den Koppelfeldport gemäß der gespeicherten Zuordnung für den angeforderten Identifizierungscode der Adressenspeichereinheit weiterleitet.

11. Call-Center nach einem der Ansprüche 8 bis 10, wobei der Identifizierungscode eine Nebenstellennummer beinhaltet.

12. Call-Center nach einem der Ansprüche 8 bis 11, wobei eine Zuordnung des Identifizierungscodes im Koppelfeld zu einem Koppelfeldport erfolgen kann.
